# EUROPEAN PATENT SPECIFICATION

(11) **EP 0 571 007 B1**
(45) Date of publication and mention of the grant of the patent: **21.08.1996**
(21) Application number: 93200860.0
(22) Date of filing: 25.03.1993
(51) Int. Cl.: B41M 5/38, B41M 5/40, C09B 53/02

(54) **Dye-donor element for use according to laser-induced thermal dye transfer**
Farbstoffdonorelement zur Anwendung in der Laser-induzierten thermischen Farbstoffübertragung
Elément donneur de colorant pour utilisation selon le transfert thermique de colorant induit par laser

(30) Priority: 21.04.1992 EP 92201112
(43) Date of publication of application: 24.11.1993
(73) Proprietor: AGFA-GEVAERT naamloze vennootschap, B-2640 Mortsel (BE)
(72) Inventor: Vanmaele, Luc, c/o Agfa-Gevaert N.V., B-2640 Mortsel (BE); Janssens, Wilhelmus, c/o Agfa-Gevaert N.V., B-2640 Mortsel (BE)

(56) References cited:
- EP-A- 0 393 252
- US-A- 4 923 638
- US-A- 5 081 101
- CHEMICAL ABSTRACTS, vol. 112, no. 14, 2 April 1990, Columbus, Ohio, US; abstract no. 120620e, M.HORII ET AL 'Preparation of indoaniline dyes' page 91 ; & JP-A-1 247 466

## Description

### 1. Field of the invention

This invention relates to dye-donor elements for use according to thermal dye sublimation transfer, in particular laser-induced thermal dye transfer, and more particularly to the use of certain infrared absorbing indoaniline dyes for use in said dye-donor elements.

### 2. Background of the invention

Thermal dye sublimation transfer is a recording method in which a dye-donor element provided with a dye layer containing sublimable dyes having heat transferability is brought into contact with a receiver sheet and selectively, in accordance with a pattern information signal, heated with a thermal printing head provided with a plurality of juxtaposed heat-generating resistors, whereby dye from the selectively heated regions of the dye-donor element is transferred to the receiver sheet and forms a pattern thereon, the shape and density of which is in accordance with the pattern and intensity of heat applied to the dye-donor element.

Another way to thermally obtain a print is to use a laser instead of a thermal printing head. In such a system, the donor sheet includes a material which strongly absorbs at the wavelength of the laser. When the donor is irradiated, this absorbing material converts light energy to thermal energy and transfers to heat to the dye in the immediate vicinity, thereby heating the dye to its vaporization temperature for transfer to the receiver. The absorbing material may be present in a layer beneath the dye and/or it may be admixed with the dye. The laser beam is modulated by electronic signals which are representative of the shape and color of the original image, so that each dye is heated to cause volatilization only in those areas in which its presence is required on the receiver to reconstruct the color of the original object. Further details of this process are found in GB 2,083,726, the disclosure of which is hereby incorporated by reference.

In GB 2,083,726, the absorbing material which is disclosed for use in their laser system is carbon. There is a problem with using carbon as the absorbing material in that it is particulate and has a tendency to clump when coated which may degrade the transferred dye image. Also, carbon may transfer to the receiver by sticking or ablation causing a mottled or desaturated color image. Therefore it is desirable to use an absorbing material which does not have these disadvantages.

It is known to use instead of carbon as absorbing material, infrared absorbing dyes that are different from the dyes used in the dye layer. Examples of such infrared absorbing dyes are described in USP 4,952,552.

It is an object of the present invention to provide novel infrared absorbing dyes for use according to laser induced thermal dye transfer printing.

Other objects will become apparent from the description hereinafter.

### 3. Statement of the invention

In accordance with the present invention a dye-donor element for use according to laser induced thermal dye transfer is provided, said dye-donor element comprising a support having thereon a dye layer and an infrared absorbing dye which is different from the dye in the dye layer, characterised in that said infrared-absorbing dye is a 2-carbazoyl-4-[N-(o,o'-disubstituted, p-substituted aminoaryl)imino]-1,4-quinone or a 2-hydroxaminocarbonyl-4-[N-(o,o'-disubstituted,p-substituted aminoaryl)imino]1,4-quinone.

### 4. Detailed description of the invention

The quinone may be a benzoquinone or a naphthoquinone, preferably a naphthoquinone.

In a preferred embodiment of the invention, the infrared-absorbing dye of the present invention corresponds to the following general formula (I) 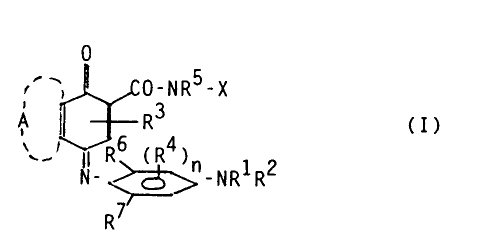 wherein
R¹ and R² each independently represent hydrogen, substituted or unsubstituted alkyl, substituted or unsubstituted cycloalkyl, substituted or unsubstituted aryl, or R¹ and R² together represent the atoms necessary for completing a heterocyclic nucleus or substituted heterocyclic nucleus, or R¹ and/or R² together with R⁴ represent the atoms necessary for completing a fused-on heterocyclic nucleus or substituted fused-on heterocyclic nucleus;
R³ is a substituent chosen from the group consisting of hydrogen, substituted or unsubstituted alkyl , substituted or unsubstituted cycloalkyl, substituted or unsubstituted aryl , substituted or unsubstituted alkoxy, substituted or unsubstituted aryloxy, substituted or unsubstituted amino, hydroxy, nitro, cyano, halogen, -NH-CO-R'; -NH-SO₂-R', -NH-PO-R'R'', -CO-NH-R', -SO₂-NH-R' wherein R' and R'' each independently represent substituted or unsubstituted alkyl, substituted or unsubstituted cycloalkyl or substituted or unsubstituted aryl ; for R³= -NHPOR'R'', R' and R'' (same or different) can also represent alkoxy or aryloxy.
R⁶ and R⁷ (each independently) represents a halogen, an alkyl group (e.g. methyl, ethyl), an aryl group, an alkoxy group (e.g. methoxy), an alkylthio group (e.g. methylthio) or acylamino; which groups may be substituted;
R⁴ is a substituent having one of the significances given to R⁶ and R⁷, or R⁴ together with R¹ and/or R² represents the atoms necessary for completing a fused-on heterocyclic nucleus or substituted fused-on heterocyclic nucleus;
n represents an integer equal to 0, 1 or 2;
R⁵ represents hydrogen, substituted or unsubstituted alkyl substituted or unsubstituted cycloalkyl or substituted or unsubstituted aryl;
A represents the necessary atoms for constituting an aromatic ring fused-on the benzene nucleus, said ring may also have an R³ substituent, and further A may be a substituent similar to the above R³;
X represents NR⁸R⁹ or OR¹⁰;
R⁸ and R⁹ each independently represent hydrogen, substituted or unsubstituted alkyl, substituted or unsubstituted cycloalkyl, substituted or unsubstituted aryl , SO₂R¹¹, COR¹¹ or POR¹¹R¹², or R⁸ and R⁹ together represent the atoms necessary for completing a heterocyclic nucleus or substituted heterocyclic nucleus:
R¹⁰ represents hydrogen, substituted or unsubstituted alkyl substituted or unsubstituted cycloalkyl, substituted or unsubstituted aryl SO₂R¹¹, COR¹¹ or POR¹¹R¹²;
R¹¹ and R¹² each independently represent substituted or unsubstituted alkyl, substituted or unsubstituted cycloalkyl, substituted or unsubstituted alkenyl , substituted or unsubstituted aralkyl , substituted or unsubstituted aryl , substituted or unsubstituted alkoxy, substituted or unsubstituted aryloxy, substituted or unsubstituted alkylthio, substituted or unsubstituted arylthio, substituted or unsubstituted amino or a substituted or unsubstituted heterocyclic group or R¹¹ and R¹² together form a 5- or 6-membered ring.

Preferably A represents the atoms necessary for constituting a ring fused-on the benzene ring so that the whole forms a naphthalene ring.

Suitable examples of substituents represented by R¹, R² and R⁵ are i .a. hydrogen, methyl, ethyl , propyl, isopropyl , butyl , pentyl , hexyl, 2-methoxyethyl , benzyl , 2-(methylsulfonylamino)ethyl, 2-hydroxyethyl, 2-cyanoethyl, methoxycarbonylmethyl, 4-sulfobutyl, cyclohexyl, cyclopentyl, cycloheptyl, phenyl , pyridyl , naphthyl , p-tolyl , p-chlorophenyl, m-(N-methyl sulfamoyl )phenyl .

Suitable examples of substituents represented by R³ and R⁴ are i.a. hydrogen, methyl , ethyl , propyl , isopropyl , butyl , pentyl , hexyl 2-methoxyethyl, 2-cyanoethyl , benzyl , 2-hydroxyethyl , dimethylamino, 2-(methylsulfonylamino)ethyl, methoxy. ethoxy, acetamido, dimethylsulfamoyl , dimethylcarbamoyl , chloro, bromo, fluoro, nitrilo.

Suitable examples of substituents represented by X are i.a. piperidino, pyrrolidino, morpholino, phenylcarbonylamino, phenylsulfonylamino, p-methylphenylsulfonylamino, methoxy, hydroxy, acetoxy, dimethylaminosulfonyloxy, di(phenyloxy)fosforyloxy, ureido, dimethylamino, anilino, diphenylamino.

Suitable examples of substituents represented by R⁶ and R⁷ are i.a. methyl, chloro, methoxy, bromo, acetylaminoe.

Infrared dyes included within the scope of the present invention include the following.

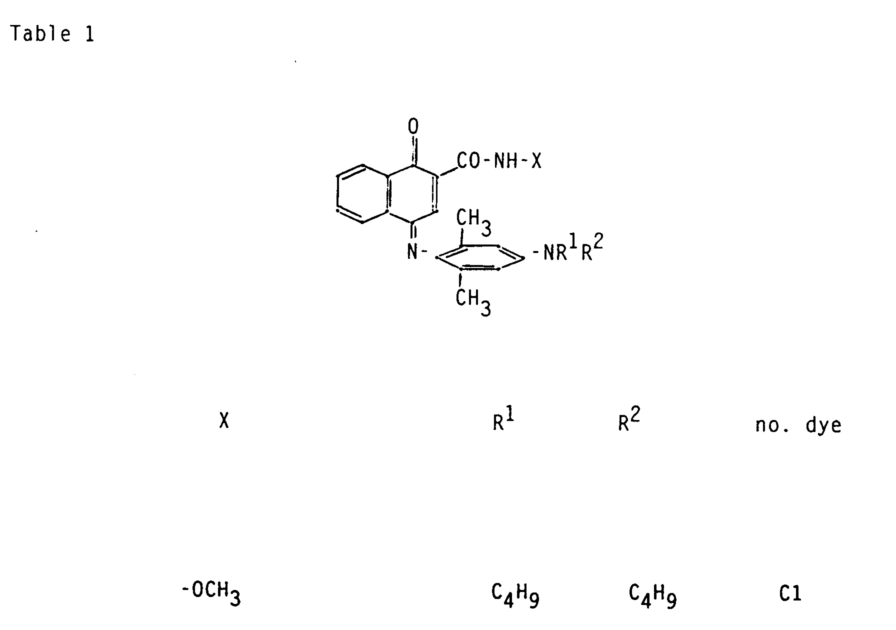

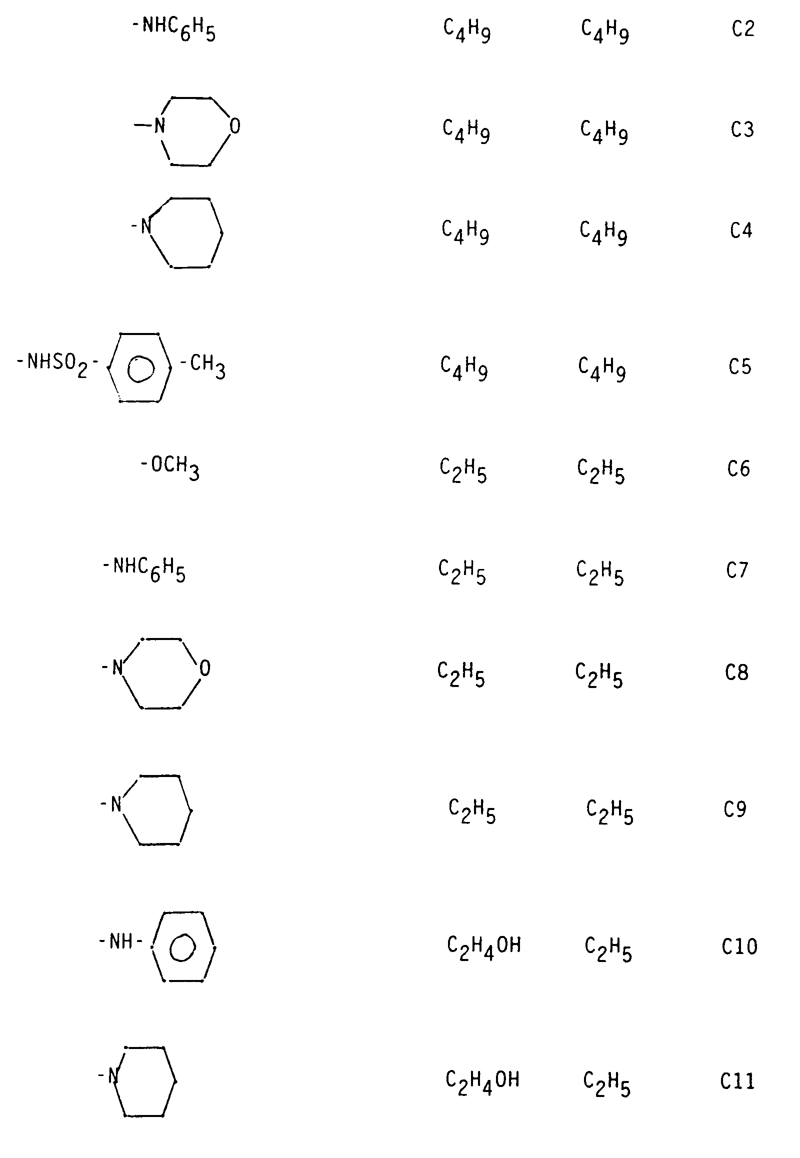

In the above table C₄H₉ represents an n-butyl group.

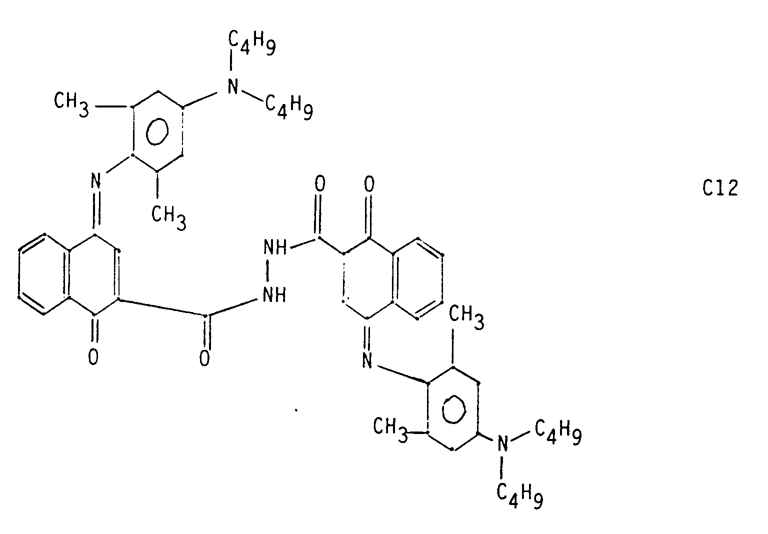

The absorption maxima (λₘₐₓ) and molar extinction coefficients (ε) of some dyes identified below were determined in methanol. The results are listed in table 2.

**Table 2**

| dye | λₘₐₓ (nm) | ε(mol⁻¹ cm⁻¹ l) |
|---|---|---|
| C1 | 748 | 13101 |
| C3 | 754 | 11036 |
| C4 | 753 | 10588 |
| C12 | 828 | 31764 |

Infrared dyes according to the present invention can be obtained by the oxidative coupling method known in the art between p-phenylenediamine compounds or p-nitrosoaniline compounds and the appropriate novel 2-carbazoyl or 2-hydroxaminocarbonyl phenols or naphthols as described in EP-A-0393252.

Representative examples of suitable p-phenylenediamine compounds are: 2,6-dimethyl-4-N,N-dimethylamino aniline, 2,6-dimethyl-4-N,N-diethylamino aniline, 2,6-dimethyl-4-(N-ethyl,N-hydroxyethyl)amino aniline, 2,6 dimethyl-4-(N-ethyl,N-cyanomethyl)amino aniline, 2,6-dimethyl-4-(N-ethyl, N-ethylsulfonic acid)amino aniline, 2,6-dimethyl,4-(N,N-diethylacetate)amino aniline, 2,6-dimethyl,4-(N,N-dihydroxyethyl)amino aniline, 2,3,5,6-tetramethyl-4-N,N-diethylamino aniline, 2,6-dimethyl-4-piperidino aniline, 2,6-dimethyl-4-morpholino aniline, 2,6-dimethyl-4-pyrrolidyl aniline, 2,6dimethyl-4-imidazolo aniline.

These dyes can also be used as infrared filter dyes, e.g. for silver halide color photographic materials and also as antihalation dyes.

According to a preferred embodiment of this invention these dyes are used as infrared absorbing compounds in a layer of a dye-donor element for use according to laser-induced thermal dye transfer, being different from the dyes in the dye layer. Said infrared dyes may be present in a layer adjacent to the dye layer; preferably they are present in the dye layer itself.

The above infrared absorbing dyes may be employed in any concentration which is effective for the intended purpose. In general, good results have been obtained at a concentration from about 0.05 to about 0.5 g/m² within the dye layer itself or in an adjacent layer.

The dye layer is formed preferably by adding the dyes, a polymeric binder medium, and other optional components to a suitable solvent or solvent mixture, dissolving or dispersing the ingredients to form a coating composition that is applied to a support, which may have been provided first with an adhesive or subbing layer, and dried.

Any dye can be used in the dye/binder layer of the dye-donor element of the present invention provided it is easily transferable to the receiver sheet by the action of heat and has a satisfactory fastness to light. Suitable dyes are those described in e.g. EP-A 209,990, EP-A 209,991, EP-A 216,483, EP-A 218,397, EP-A 227,095, EP-A 227,096, EP-A 229,374, EP-A 257,577, EP-A 257,580, EP-A 400706, EP-A 453020, JP 84/78894, JP 84/78895, JP 84/78896, JP 84/227,490, JP 84/227,948, JP 85/27594, JP 85/30391, JP 85/229,787, JP 85/229,789, JP 85/229,790, JP 85/229,791, JP 85/229,792, JP 85/229,793, JP 85/229,795, JP 86/41596, JP 86/268,493, JP 86/268,494, JP 86/268,495, and JP 86/284,489.

The dye layer thus formed generally has a thickness of about 0.2 to 5.0 µm, preferably 0.4 to 2.0 µm, and the amount ratio of dye to binder is generally between 9:1 and 1:3 by weight, preferably between 2:1 and 1:2 by weight.

As polymeric binder the following can be used: cellulose derivatives, such as ethyl cellulose, hydroxyethyl cellulose, ethylhydroxy cellulose, ethylhydroxyethyl cellulose, hydroxypropyl cellulose, methyl cellulose, nitrocellulose, cellulose acetate formate, cellulose acetate hydrogen phthalate, cellulose acetate, cellulose acetate propionate, cellulose acetate butyrate, cellulose acetate pentanoate, cellulose acetate benzoate, cellulose triacetate; vinyl-type resins and derivatives, such as polyvinyl alcohol, polyvinyl acetate, polyvinyl butyral, copolyvinyl butyral-vinyl acetal-vinyl alcohol, polyvinyl pyrrolidone, polyvinyl acetoacetal, polyacrylamide; polymers and copolymers derived from acrylates and acrylate derivatives, such as polyacrylic acid, polymethyl methacrylate and styrene-acrylate copolymers; polyester resins; polycarbonates; copolystyrene-acrylonitrile; polysulfones: polyphenylene oxide; organosilicones, such as polysiloxanes; epoxy resins and natural resins, such as gum arabic.

The coating layer may also contain other additives, such as curing agents, preservatives, etc., these and other ingredients being described more fully in EP 133011, EP 133012, EP 111004 and EP 279467.

Any material can be used as the support for the dye-donor element provided it is dimensionally stable and capable of withstanding the temperatures involved, up to 400°C over a period of up to 20 msec, and is yet thin enough to transmit heat applied on one side through to the dye on the other side to effect transfer to the receiver sheet within such short periods, typically from 1 to 10 msec. Such materials include sheets or films of polyester such as polyethylene terephthalate, polyamide, polyacrylate, polycarbonate, cellulose ester, fluorinated polymer, polyether, polyacetal, polyolefin, polyimide, glassine paper and condenser paper. Preference is given to a support comprising polyethylene terephthalate. In general, the support has a thickness of 2 to 30 um. The support may also be coated with an adhesive or subbing layer, if desired.

The dye layer of the dye-donor element may be coated on the support or printed thereon by a printing technique such as a gravure process.

A dye-barrier layer comprising a hydrophilic polymer may also be employed in the dye-donor element between its support and the dye layer to improve the dye transfer densities by preventing wrong-way transfer of dye towards the support. The dye barrier layer may contain any hydrophilic material which is useful for the intended purpose. In general, good results have been obtained with gelatin, polyacryl amide, polyisopropyl acrylamide, butyl methacrylate grafted gelatin, ethyl methacrylate grafted gelatin, ethyl acrylate grafted gelatin, cellulose monoacetate, methyl cellulose, polyvinyl alcohol, polyethylene imine, polyacrylic acid, a mixture of polyvinyl alcohol and polyvinyl acetate, a mixture of polyvinyl alcohol and polyacrylic acid or a mixture of cellulose monoacetate and polyacrylic acid. Suitable dye barrier layers have been described in e.g. EP 227091 and EP 228065. Certain hydrophilic polymers, for example those described in EP 227091, also have an adequate adhesion to the support and the dye layer, thus eliminating the need for a separate adhesive or subbing layer. These particular hydrophilic polymers used in a single layer in the donor element thus perform a dual function, hence are referred to as dye-barrier/subbing layers.

Preferably the reverse side of the dye-donor element can be coated with a slipping layer to prevent the printing head from sticking to the dye-donor element. Such a slipping layer would comprise a lubricating material such as a surface active agent, a liquid lubricant, a solid lubricant or mixtures thereof, with or without a polymeric binder. The surface active agents may be any agents known in the art such as carboxylates, sulfonates, phosphates, aliphatic amine salts, aliphatic quaternary ammonium salts, polyoxyethylene alkyl ethers, polyethylene glycol fatty acid esters, fluoroalkyl C₂-C₂₀ aliphatic acids. Examples of liquid lubricants include silicone oils, synthetic oils, saturated hydrocarbons and glycols. Examples of solid lubricants include various higher alcohols such as stearyl alcohol, fatty acids and fatty acid esters. Suitable slipping layers are described in e.g. EP 138483, EP 227090, US 4567113, US 4572860, US 4717711, and in EP application No. 91202071.

The support for the receiver sheet that is used with the dye-donor element may be a transparant film of e.g. polyethylene terephthalate, a polyether sulfone, a polyimide, a cellulose ester or a polyvinyl alcohol-co-acetal. The support may also be a reflective one such as baryta-coated paper, polyethylene-coated paper or white polyester i.e. white-pigmented polyester.

To avoid poor adsorption of the transferred dye to the support of the receiver sheet this support must be coated with a special surface, a dye-image-receiving layer, into which the dye can diffuse more readily. The dye-image-receiving layer may comprise, for example, a polycarbonate, a polyurethane, a polyester, a polyamide, polyvinyl chloride, polystyrene-co-acrylonitrile, polycaprolactone or mixtures thereof. Suitable dye-receiving layers have been described in e.g. EP 133011, EP 133012, EP 144247, EP 227094, EP 228066. Alternatively the dye-image receiving layer comprises a cured reaction product of poly(vinylalcohol-vinylacetate-vinylchloride) and isocyanate.

In order to improve the light resistance and other stabilities of recorded images, UV absorbers, singlet oxygen quenchers such as HALS-compounds (Hindered Amine Light Stabilizers) and/or antioxidants may be incorporated into the receiving layer.

The dye layer of the dye-donor element or the dye-image-receiving layer of the receiver sheet may also contain a releasing agent that aids in separating the dye-donor element from the dye-receiving element after transfer. The releasing agents can also be applied in a separate layer on at least part of the dye layer or of the receiving layer. For the releasing agent solid waxes, fluorine- or phosphate-containing surfactants and silicone oils are used. Suitable releasing agents are described in e.g. EP 133012, JP 85/19138, EP 227092.

The dye-donor elements according to the invention are used to form a dye transfer image. Such a process comprises placing the dye layer of the donor element in face-to-face relation with the dye-receiving layer of the receiver sheet and imagewise heating from the back of the donor element. The transfer of the dye is accomplished e.g. by heating or flashing.

When the process is performed for but one single color, a monochrome dye transfer image is obtained. A multicolor image can be obtained by using a donor element containing three or more primary color dyes, and sequentially performing the process steps described above for each color. After the first dye has been transferred, the elements are peeled apart. A second dye-donor element (or another area of the donor element with a different dye area) in then brought in register with the dye-receiving element and the process is repeated. The third color and optionally further colors are obtained in the same manner.

Several different kinds of lasers could conceivably be used to effect the thermal transfer of dye from the donor sheet to the receiver, such as ion gas lasers like argon and krypton; metal vapor lasers such as copper, gold, and cadmium; solid state lasers such as ruby or YAG; or diode lasers such as gallium arsenide emitting in the infrared region from 750 to 870 nm. However, in practice, the diode lasers offer substantial advantages in terms of their small size, low cost, stability, reliability, ruggedness, and ease of modulation. In practice, before any laser can be used to heat a dye-donor element, the laser radiation must be absorbed into the dye layer and converted to heat by a molecular process known as internal conversion. Thus, the construction of a useful dye layer will depend not only on the hue, sublimability and intensity of the image dye, but also on the ability of the dye layer to absorb the radiation and convert it to heat.

Lasers which can be used to transfer dye from the dye-donor elements of the invention are available commercially. There can be employed, for example, Laser Model SDL-2420-H2 from Spectrodiode Labs, or Laser Model SLD 304 V/W from Sony Corp.

A thermal dye transfer assemblage of the invention comprises
(a) a dye-donor element as described above, and
(b) a dye-receiving element as described above,
the dye-receiving element being in a superposed relationship with the dye-donor element so that the dye layer of the donor element is adjacent to and overlying the image-receiving layer of the receiving element.

The above assemblage comprising these two elements may be preassembled as an integral unit when a monochrome image is to be obtained. This may be done by temporarily adhering the two elements together at their margins. After transfer, the dye-receiving element is then peeled apart to reveal the dye transfer image.

When a three-color image is to be obtained, the above assemblage is formed on three occasions during the time when heat is applied using the laser beam. After the first dye is transferred, the elements are peeled apart. A second dye-donor element (or another area of the donor element with a different dye area) is then brought in register with the dye-receiving element and the process repeated. The third color is obtained in the same manner.

The following examples are provided to illustrate the invention in more detail without limiting, however, the scope thereof.

### EXAMPLES

A dye-donor element for use according to thermal dye sublimation transfer was prepared as follows:

A solution of 50 mg of dye as identified below, 50 mg of infrared-absorbing dye as identified below, and 50 mg of co-acrylonitrile-styrene binder in 10 ml of methylethylketone was prepared. From this solution a layer having a wet thickness of 100 µm was coated on 5 µm polyethylene terephthalate film. The resulting layer was dried by evaporation of the solvent.

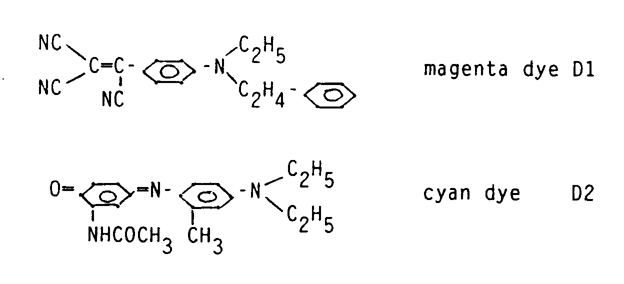

Control dye-donor elements were made as described above containing no infrared-absorbing dyes.

As dye receiving elements were used commercially available Mitsubishi materials type CK100TS (film) and CK100S (paper).

The dye-receiver was overlaid with the dye-donor element placed on a x-y table with vacuum suction. The assembly was exposed with a focused laser SONY SLD204V type AlGaAs, pulse 100 µs, wavelength 820 nm, spot diameter 5 µm. The power level of the laser was approximately 22 milliwatts and the exposure energy was 1 erg.µm².

With this assembly a square figure has been written consisting of 12.5 lines with a line distance of 4 µm and a dot distance of 5 µm.

The obtained densities were measured by a Quantimet 970 densitometer in profile mode, in green for the magenta dye, in red for the cyan dye.

The results are given in table 3.

**Table 3**

| Color Dye | Infrared absorbing dye | Density on | |
|---|---|---|---|
| | | CK100S | CK100TS |
| D1 | None (control) | 0,0 | 0,0 |
| D1 | C1 | 0,14 | 0,40 |
| D1 | C3 | - | 0,10 |
| D1 | C4 | - | 0,06 |
| D2 | None (control) | 0,0 | 0,0 |
| D2 | C1 | 0,36 | 0,35 |
| D2 | C3 | 0,36 | 0,07 |
| D2 | C4 | - | 0,23 |

## Claims

1. Dye-donor element for use according to laser-induced thermal dye transfer, said dye-donor element comprising a support having thereon a dye layer and an infrared-absorbing dye which is different from the dye in the dye-layer, characterized in that said infrared-absorbing dye is a 2-carbazoyl-4-[N-(o,o'-disubstituted, p-substituted aminoaryl)iminol-1,4-quinone or a 2-hydroxaminocarbonyl-4-[N-(o,o'-disubstituted,p-substituted aminoaryl )imino]1,4-quinone.

2. Dye-donor element according to claim 1, wherein the quinone is a naphthoquinone.

3. Dye-donor element according to claim 1, wherein said infrared-absorbing dye corresponds to the following general formula (I) : 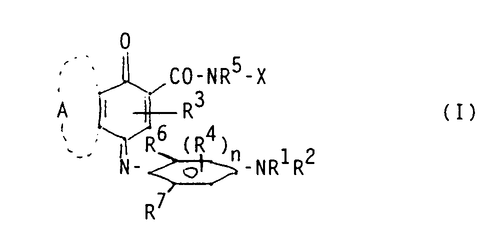 wherein
R¹ and R² each independently represent hydrogen, substituted or unsubstituted alkyl, substituted or unsubstituted cycloalkyl, substituted or unsubstituted aryl, or R¹ and R² together represent the atoms necessary for completing a heterocyclic nucleus or substituted heterocyclic nucleus, or R¹ and/or R² together with R⁴ represent the atoms necessary for completing a fused-on heterocyclic nucleus or substituted fused-on heterocyclic nucleus;
R³ is a substituent chosen from the group consisting of hydrogen, substituted or unsubstituted alkyl, substituted or unsubstituted cycloalkyl, substituted or unsubstituted aryl, substituted or unsubstituted alkoxy, substituted or unsubstituted aryloxy, substituted or unsubstituted amino, hydroxy, nitro, cyano, halogen, -NH-CO-R': -NH-SO₂-R', -NH-PO-R'R'', -CO-NH-R', -SO₂-NH-R' wherein R' and R'' each independently represent substituted or unsubstituted alkyl, substituted or unsubstituted cycloalkyl or substituted or unsubstituted aryl ; for R³=-NH-PO-R'R'', R' and R''each independently can also represent alkoxy or aryloxy.
R⁶ and R⁷ each independently represents a halogen, an alkyl group, an aryl group, an alkoxy group, an alkylthio group which groups may be substituted;
R⁴ is a substituent having one of the significances given to R⁶ and R⁷, or R⁴ together with R¹ and/or R² represents the atoms necessary for completing a fused-on heterocyclic nucleus or substituted fused-on heterocyclic nucleus;
n represents an integer equal to 0, 1 or 2;
R⁵ represents hydrogen, substituted or unsubstituted alkyl, substituted or unsubstituted cycloalkyl or substituted or unsubstituted aryl;
A represents the necessary atoms for constituting an aromatic ring fused-on the benzene nucleus, said ring may also have an R³ substituent, and further A may be a substituent similar to the above R³;
X represents NR⁸R⁹ or OR¹⁰;
R⁸ and R⁹ each independently represent hydrogen, substituted or unsubstituted alkyl, substituted or unsubstituted cycloalkyl, substituted or unsubstituted aryl, SO₂R¹¹, COR¹¹ or POR¹¹R¹², or R⁸ and R⁹ together represent the atoms necessary for completing a heterocyclic nucleus or substituted heterocyclic nucleus;
R¹⁰ represents hydrogen, substituted or unsubstituted alkyl, substituted or unsubstituted cycloalkyl, substituted or unsubstituted aryl, SO₂R¹¹, COR¹¹ or POR¹¹R¹²;
R¹¹ and R¹² each independently represent substituted or unsubstituted alkyl, substituted or unsubstituted cycloalkyl, substituted or unsubstituted alkenyl, substituted or unsubstituted aralkyl, substituted or unsubstituted aryl, substituted or unsubstituted alkoxy, substituted or unsubstituted aryloxy, substituted or unsubstituted alkylthio, substituted or unsubstituted arylthio, substituted or unsubstituted amino or a substituted or unsubstituted heterocyclic group or R¹¹ and R¹² together form a 5- or 6-membered ring.

4. Dye-donor element according to any one of the preceding claims, wherein said infrared-absorbing dyes are present in the dye layer.

5. Dye-donor element according to any one of the preceding claims, wherein said infrared-absorbing dyes are employed at a concentration from about 0.05 to about 0.5 g/m².

6. An infrared absorbing dye as defined in any of claims 1 to 3 with the exclusion of:
(i) infrared absorbing dyes obtainable by oxidative coupling of 2-carbazoyl phenols, 2-carbazoyl naphthols, 2-hydroxyaminocarbonyl phenols or 2-hydroxyaminocarbonyl naphthols with 2,6-dimethyl,4-(N,N-dihydroxyethyl)amino aniline or 2,3,5,6-tetramethyl,4-(N,N-diethyl)amino aniline;
(ii) infrared absorbing dyes according to the following formula: 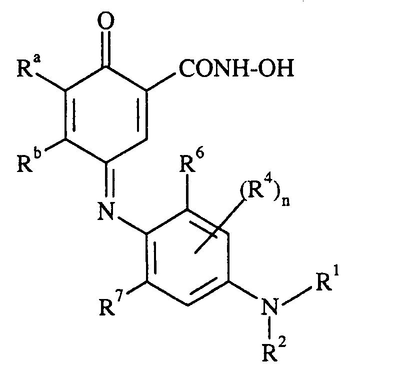 wherein:
R^{a}, R^{b} each represent hydrogen, an alkyl group or R^{a} and R^{b} together with the atoms to which they are attached represent a fused-on substituted or unsubstituted benzene ring;
R⁴, R⁶ and R⁷ each independently represent an alkyl or alkoxy group;
R¹, R² each independently represent an alkyl group or an aralkyl group and n represents 0, 1 or 2.

7. Use of a dye donor element as defined in any of claims 1 to 5 in laser-induced thermal dye transfer printing.

## Patentansprüche

1. Farbstoffdonorelement zur Verwendung beim laserinduzierten Farbstoffthermotransfer mit einem Schichtträger, auf dem sich eine Farbstoffschicht und ein von dem Farbstoff in der Farbstoffschicht verschiedener infrarotabsorbierender Farbstoff befinden, dadurch gekennzeichnet, daß es sich bei dem infrarotabsorbierenden Farbstoff um ein 2-Carbazoyl-4-[N-(o,o'-disubstituiertes, p-substituiertes Aminoaryl)imino]-1,4-chinon oder ein 2-Hydroxaminocarbonyl-4-[N-(o,o'-disubstituiertes, p-substituiertes Aminoaryl)imino]-1,4-chinon handelt.

2. Farbstoffdonorelement nach Anspruch 1, wobei es sich bei dem Chinon um ein Naphthochinon handelt.

3. Farbstoffdonorelement nach Anspruch 1, wobei der infrarotabsorbierende Farbstoff der nachstehenden allgemeinen Formel (I) entspricht: 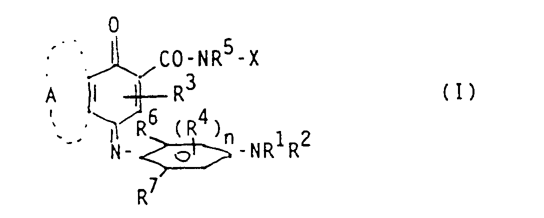 worin
R¹ und R² unabhängig voneinander jeweils Wasserstoff, gegebenenfalls substituiertes Alkyl, gegebenenfalls substituiertes Cycloalkyl oder gegebenenfalls substituiertes Aryl oder R¹ und R² zusammen die zur Vervollständigung eines gegebenenfalls substituierten heterocyclischen Rings notwendigen Atome oder R¹ und/oder R² zusammen mit R⁴ die zur Vervollständigung eines gegebenenfalls substituierten anellierten heterocyclischen Rings notwendigen Atome bedeuten,
R³ ein aus der Gruppe, bestehend aus Wasserstoff, gegebenenfalls substituiertem Alkyl, gegebenenfalls substituiertem Cycloalkyl, gegebenenfalls substituiertem Aryl, gegebenenfalls substituiertem Alkoxy, gegebenenfalls substituiertem Aryloxy, gegebenenfalls substituiertem Amino, Hydroxy, Nitro, Cyano, Halogen, -NH-CO-R', -NH-SO₂-R', -NH-PO-R'R'', -CO-NH-R', -SO₂-NH-R', wobei R' und R'' unabhängig voneinander jeweils gegebenenfalls substituiertes Alkyl, gegebenenfalls substituiertes Cycloalkyl oder gegebenenfalls substituiertes Aryl bedeuten, wobei R' und R'' im Fall von R³=-NH-PO-R'R'' unabhängig voneinander auch Alkoxy oder Aryloxy bedeuten können, ausgewählter Substituent ist,
R⁶ und R⁷ unabhängig voneinander jeweils Halogen, eine Alkyl-, Aryl-, Alkoxy- oder Alkylthiogruppe, wobei diese Gruppen gegebenenfalls substituiert sein können, bedeuten,
R⁴ ein Substituent mit einer der für R⁶ und R⁷ angegebenen Bedeutungen ist oder R⁴ zusammen mit R¹ und/oder R² die zur Vervollständigung eines gegebenenfalls substituierten anellierten heterocyclischen Rings notwendigen Atome bedeutet,
n die ganze Zahl 0, 1 oder 2 bedeutet,
R⁵ Wasserstoff, gegebenenfalls substituiertes Alkyl, gegebenenfalls substituiertes Cycloalkyl oder gegebenenfalls substituiertes Aryl bedeutet,
A die zur Bildung eines an den Benzolring anellierten aromatischen Rings, der gegebenenfalls einen Substituenten R³ tragen kann, notwendigen Atome bedeutet und ferner ein dem obengenannten R³ ähnlicher Substituent sein kann,
X NR⁸R⁹ oder OR¹⁰ bedeutet,
R⁸ und R⁹ unabhängig voneinander jeweils Wasserstoff, gegebenenfalls substituiertes Alkyl, gegebenenfalls substituiertes Cycloalkyl, gegebenenfalls substituiertes Aryl, SO₂R¹¹, COR¹¹ oder POR¹¹R¹² oder R⁸ und R⁹ zusammen die zur Vervollständigung eines gegebenenfalls substituierten heterocyclischen Rings bedeuten,
R¹⁰ Wasserstoff, gegebenenfalls substituiertes Alkyl, gegebenenfalls substituiertes Cycloalkyl, gegebenenfalls substituiertes Aryl, SO₂R¹¹, COR¹¹ oder POR¹¹R¹² bedeutet,
R¹¹ und R¹² unabhängig voneinander jeweils gegebenenfalls substituiertes Alkyl, gegebenenfalls substituiertes Cycloalkyl, gegebenenfalls substituiertes Alkenyl, gegebenenfalls substituiertes Aralkyl, gegebenenfalls substituiertes Aryl, gegebenenfalls substituiertes Alkoxy, gegebenenfalls substituiertes Aryloxy, gegebenenfalls substituiertes Alkylthio, gegebenenfalls substituiertes Arylthio, gegebenenfalls substituiertes Amino oder eine gegebenenfalls substituierte heterocyclische Gruppe bedeuten oder R¹¹ und R¹² zusammen einen 5- oder 6-gliedrigen Ring bilden.

4. Farbstoffdonorelement nach einem der vorhergehenden Ansprüche, wobei die infrarotabsorbierenden Farbstoffe in der Farbstoffschicht vorliegen.

5. Farbstoffdonorelement nach einem der vorhergehenden Ansprüche, wobei die infrarotabsorbierenden Farbstoffe in einer Konzentration von etwa 0,05 bis etwa 0,5 g/m² eingesetzt werden.

6. Infrarotabsorbierender Farbstoff nach einem der Ansprüche 1 bis 3 mit Ausnahme von:
(i) infrarotabsorbierenden Farbstoffen, die erhältlich sind durch oxidative Kupplung von 2-Carbazoylphenolen, 2-Carbazoylnaphtholen, 2-Hydroxyaminocarbonylphenolen oder 2-Hydroxyaminocarbonylnaphtholen mit 2,6-Dimethyl,4-(N,N-dihydroxyethyl)aminoanilin oder 2,3,5,6-Tetramethyl,4-(N,N-diethyl)aminoanilin,
(ii) infrarotabsorbierenden Farbstoffen, die der folgenden Formel entsprechen: 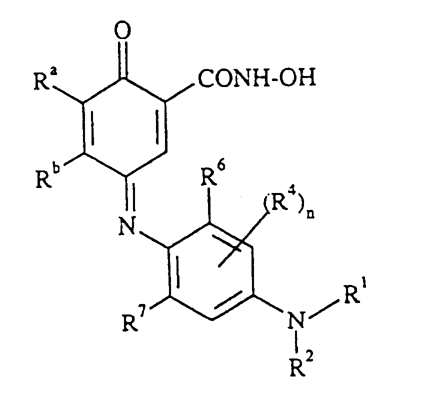 worin:
R^{a}, R^{b} jeweils Wasserstoff oder eine Alkylgruppe oder R^{a} und R^{b} zusammen mit den Atomen, an die sie gebunden sind, einen gegebenenfalls substituierten anellierten Benzolring,
R⁴, R⁶ und R⁷ unabhängig voneinander jeweils eine Alkyl- oder Alkoxygruppe,
R¹, R² unabhängig voneinander jeweils eine Alkyl- oder Aralkylgruppe bedeuten und n für 0, 1 oder 2 steht.

7. Verwendung eines Farbstoffdonorelements nach einem der Ansprüche 1 bis 5 beim laserinduzierten Thermotransferdruck.

## Revendications

1. Elément donneur de colorant à utiliser en transfert thermique de colorant à induction laser, ledit élément donneur de colorant comprenant un support sur lequel se trouve une couche de colorant et un colorant absorbant l'infrarouge qui est différent du colorant dans la couche de colorant, caractérisé en ce que ledit colorant absorbant l'infrarouge est une 2-carbazoyl-4-[N-(aminoaryl p-substitué o,o'-disubstitué)imino]-1,4-quinone ou une 2-hydroxyaminocarbonyl-4-[N-(aminoaryl p-substitué o,o'-disubstitué)imino]-1,4-quinone.

2. Elément donneur de colorant selon la revendication 1, dans lequel la quinone est une naphtoquinone.

3. Elément donneur de colorant selon la revendication 1, dans lequel ledit colorant absorbant l'infrarouge répond à la formule générale (I) suivante: 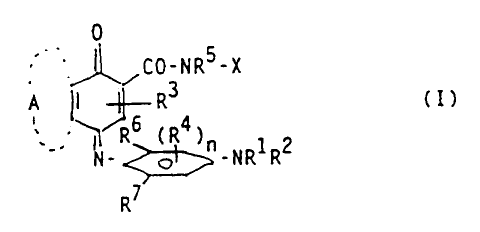 dans laquelle
R¹ et R² représentent chacun, indépendamment, un atome d'hydrogène, un groupe alkyle substitué ou non substitué, un groupe cycloalkyle substitué ou non substitué, un groupe aryle substitué ou non substitué, ou bien R¹ et R² représentent ensemble les atomes nécessaires pour compléter un noyau hétérocyclique ou un noyau hétérocyclique substitué, ou R¹ et/ou R², conjointement avec R⁴, représentent les atomes nécessaires pour compléter un noyau hétérocyclique condensé ou un noyau hétérocyclique condensé substitué;
R³ est un substituant choisi dans le groupe constitué par un atome d'hydrogène, un groupe alkyle substitué ou non substitué, un groupe cycloalkyle substitué ou non substitué, un groupe aryle substitué ou non substitué, un groupe alcoxy substitué ou non substitué, un groupe aryloxy substitué ou non substitué, un groupe amino substitué ou non substitué, ou un groupe hydroxy, nitro, cyano, halogéno, -NH-CO-R', -NH-SO₂-R', -NH-PO-R'R'', -CO-NH-R', -SO₂-NH-R', où R' et R'' représentent chacun, indépendamment, un groupe alkyle substitué ou non substitué, un groupe cycloalkyle substitué ou non substitué ou un groupe aryle substitué ou non substitué; lorsque R³ = -NH-PO-R'R'', R' et R'' (chacun indépendamment) peuvent aussi représenter un groupe alcoxy ou aryloxy;
R⁶ et R⁷ (chacun indépendamment) représentent un atome d'halogène, un groupe alkyle un groupe aryle, un groupe alcoxy, un groupe alkylthio; ces groupes pouvant être substitués;
R⁴ est un substituant ayant l'une des significations données pour R⁶ et R⁷, ou bien R⁴, conjointement avec R¹ et/ou R², représente les atomes nécessaires pour compléter un noyau hétérocyclique condensé ou un noyau hétérocyclique condensé substitué;
n représente un nombre entier égal à 0, 1 ou 2;
R⁵ représente un atome d'hydrogène, un groupe alkyle substitué ou non substitué, un groupe cycloalkyle substitué ou non substitué ou un groupe aryle substitué ou non substitué;
A représente les atomes nécessaires pour compléter un noyau aromatique condensé sur le noyau benzénique, ledit noyau pouvant aussi comporter un substituant R³, et par ailleurs A peut être un substituant analogue à R³ ci-dessus;
X représente NR⁸R⁹ ou OR¹⁰;
R⁸ et R⁹ représentent chacun, indépendamment, un atome d'hydrogène, un groupe alkyle substitué ou non substitué, un groupe cycloalkyle substitué ou non substitué, un groupe aryle substitué ou non substitué, ou un groupe SO₂R¹¹, COR¹¹ ou POR¹¹R¹², ou bien R⁸ et R⁹ représentent ensemble les atomes nécessaires pour compléter un noyau hétérocyclique condensé ou un noyau hétérocyclique condensé substitué;
R¹⁰ représente un atome d'hydrogène, un groupe alkyle substitué ou non substitué, un groupe cycloalkyle substitué ou non substitué, un groupe aryle substitué ou non substitué, ou un groupe SO₂R¹¹, COR¹¹ ou POR¹¹R¹²;
R¹¹ et R¹² représentent chacun, indépendamment, un groupe alkyle substitué ou non substitué, un groupe cycloalkyle substitué ou non substitué, un groupe alcényle substitué ou non substitué, un groupe arylalkyle substitué ou non substitué, un groupe aryle substitué ou non substitué, un groupe alcoxy substitué ou non substitué, un groupe aryloxy substitué ou non substitué, ou un groupe alkylthio substitué ou non substitué, un groupe arylthio substitué ou non substitué, un groupe amino substitué ou non substitué, un groupe hétérocyclique substitué ou non substitué, ou bien R¹¹ et R¹² forment ensemble un noyau à 5 ou 6 chaînons.

4. Elément donneur de colorant selon l' une quelconque des revendications précédentes, dans lequel lesdits colorants absorbant l'infrarouge sont présents dans la couche de colorant.

5. Elément donneur de colorant selon l'une quelconque des revendications précédentes, dans lequel lesdits colorants absorbant l'infrarouge sont employés à une concentration d'environ 0,05 à environ 0,5 g/m².

6. Colorant absorbant l'infrarouge tel que défini dans l'une quelconque des revendications 1 à 3, à l'exception:
(i) des colorants absorbant l'infrarouge pouvant être obtenus par couplage oxydant de 2-carbazoylphénols, de 2-carbazoylnaphtols, de 2-hydroxyaminocarbonylphénols ou de 2-hydroxyaminocarbonylnaphtols avec la 2,6-diméthyl-4-(N,N-dihydroxyéthyl)aminoaniline ou la 2,3,5,6-tétraméthyl-4-(N,N-diéthyl)aminoaniline;
(ii) des colorants absorbant l'infrarouge répondant à la formule suivante: 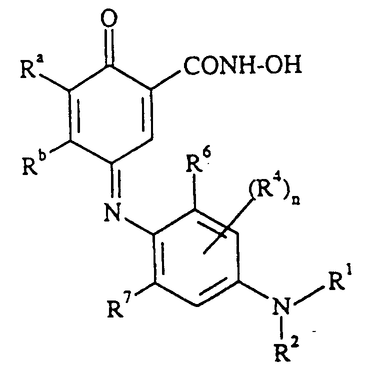 dans laquelle:
R^{a}, R^{b} représentent chacun un atome d'hydrogène, un groupe alkyle, ou R^{a} et R^{b}, conjointement avec les atomes auxquels ils sont fixés, représentent un noyau benzénique condensé substitué ou non substitué;
R⁴, R⁶ et R⁷ représentent chacun, indépendamment, un groupe alkyle ou alcoxy;
R¹, R² représentent chacun, indépendamment, un groupe alkyle ou un groupe arylalkyle et n représente 0, 1 ou 2.

7. Utilisation d'un élément donneur de colorant tel que défini dans l'une quelconque des revendications 1 à 5 en impression par transfert thermique de colorant à induction laser.
